# EUROPEAN PATENT APPLICATION

(11) **EP 2 254 044 A1**
(43) Date of publication of application: **24.11.2010**
(21) Application number: 10156327.8
(22) Date of filing: 12.03.2010
(51) Int. Cl.: G06F 9/445

(54) **Connectivity management for transport independent architectures**

(30) Priority: 31.03.2009 US 415708
(71) Applicant: Nokia Corporation, 02150 Espoo (FI)
(72) Inventor: Palin, Arto Tapio, 37830, Viiala (FI); Berg, Heikki Ilmari, 37830, Viiala (FI); Kalliojärvi, Kari, 36200, Kangasala (FI)
(74) Representative: Nokia Corporation

(57) **Abstract**

A system for facilitating the configuration of access to resources residing within an operating environment comprising multiple apparatuses. Apparatuses may establish a common operating environment based on interactions taking place via a shared memory space residing on one or more of the apparatuses. Apparatuses that desire to interact with other apparatuses also participating in the common operating environment, for example in order to access resources residing on the other apparatuses, may initially obtain communication configuration information that is usable for establishing links to the other apparatuses.

## Description

### BACKGROUND

### 1. Field of Invention:

The present invention relates to resource access in multi-device architectures, and in particular, to facilitating access to resources on apparatuses through the provision of communication configuration information based on operational criteria.

### 2. Background:

In general, software programs may comprise at least executable instruction code that may facilitate the processing (e.g., computation, calculation, evaluation, etc.) of input in order to yield an output. Over the years, software technology has evolved to transform these individual instruction sets into modules that may, in turn, be integrated together to form the more complex programs we utilize today. Today's more-sophisticated software programs may receive various forms of input such as raw data, for example as stored in magnetic or optical storage, user input through various known types of user interfaces, measured or monitored information converted to electronic information from electronic and/or electromechanical sensors, etc.

Programs may, in some instances, be configured to produce data usable by other software applications. However, problems may arise when conveying information between these programs. If an information exchange scenario is known before the interacting programs are formulated, then a specific strategy may be devised to convert one program's output into a form that is usable as another program's input. Traditionally this strategy has led to functional but extremely rigid software application configurations, requiring frequent and possibly substantial revisions due to changes in required functionality, implementation platform, architecture, etc.

This inflexibility may add to the complication involved in the configuration of software and/or apparatus interaction, which may result in confusion and frustration for the user. For example, when performing activities using an apparatus, users may not only have to know the applications involved in executing the activity, but also whether these applications reside on the same or separate apparatuses. If the applications are separately situated, users may further have to comprehend both how to configure the application interaction and also the underlying communications needed to link the apparatuses. Existing architectures require users to have independent knowledge of the resources on each apparatus, the communication abilities of each apparatus and how the application/apparatus should be configured in order to perform the desired transaction. Some or all of this knowledge is often outside of the skill level of an average user.

### SUMMARY

Various example embodiments of the present invention may be directed to a method, apparatus, computer program product and system for facilitating the configuration of access to resources residing within an operating environment comprising multiple apparatuses. Apparatuses may establish a common operating environment based on interactions taking place via a shared memory space residing on one or more of the apparatuses. Apparatuses that desire to interact with other apparatuses also participating in the common operating environment, for example in order to access resources residing on the other apparatuses, may initially obtain communication configuration information usable for connecting to the other apparatuses.

In various example implementations of the present invention, services that may be configured to provide communication configuration information may reside in at least one of the apparatuses. Access to the services for any or all of the apparatuses may be provided via the shared memory space. When determining possible communication configurations, the services may obtain decision criteria information from any or all of the apparatuses. Example decision criteria information may include, but is not limited to, apparatus resource (e.g., hardware and/or software) information, apparatus condition information, operational environment information, etc. The services may then utilize the decision criteria information, possibly in conjunction with rule/preference information, to formulate one or more preferred communication configurations.

The communication configuration information formulated by the services may, in accordance with at least one example embodiment of the present invention, then be provided via the shared memory space in order to support interaction between the apparatuses. In at least one use scenario, an apparatus may identify resources to access on other apparatuses. The apparatus may then utilize communication configuration information provided by the services in order to determine how communications underlying the access activities can and/or should be configured.

The foregoing summary includes example embodiments of the present invention that are not intended to be limiting. The above embodiments are used merely to explain selected aspects or steps that may be utilized in implementations of the present invention. However, it is readily apparent that one or more aspects, or steps, pertaining to an example embodiment can be combined with one or more aspects, or steps, of other embodiments to create new embodiments still within the scope of the present invention. Therefore, persons of ordinary skill in the art would appreciate that various embodiments of the present invention may incorporate aspects from other embodiments, or may be implemented in combination with other embodiments.

### DESCRIPTION OF DRAWINGS

The invention will be further understood from the following description of various example embodiments, taken in conjunction with appended drawings, in which:

FIG. 1 discloses the example levels of a wireless communication architecture in accordance with at least one embodiment of the present invention.

FIG. 2 discloses an example link between two wireless communication devices in accordance with at least one embodiment of the present invention.

FIG. 3 discloses an example of services being utilized to create service nodes on a billboard in accordance with at least one embodiment of the present invention.

FIG. 4A discloses an example Network on Terminal Architecture in accordance with at least one embodiment of the present invention.

FIG. 4B discloses an example transport table in accordance with at least one embodiment of the present invention.

FIG. 5 discloses an example of communication to a billboard utilizing a connection map in accordance with at least one embodiment of the present invention.

FIG. 6A-6E discloses an example of an application querying and selecting a service in accordance with at least one embodiment of the present invention.

FIG. 6F discloses an example of the provision of services between devices using a billboard in accordance with at least one embodiment of the present invention.

FIG. 7 discloses an example scenario wherein apparatuses are interacting in accordance with at least one embodiment of the present invention.

FIG. 8 discloses an example implementation scenario in accordance with at least one embodiment of the present invention.

FIG. 9A discloses an example of a cognitive radio (CR) system in accordance with at least one embodiment of the present invention.

FIG. 9B discloses an example integration of a cognitive radio (CR) system into a communication architecture wherein application level entities may interact directly with CR system components in accordance with at least one embodiment of the present invention.

FIG. 9C discloses an example integration of a cognitive radio (CR) system into a communication architecture wherein CR system activities may be transparent to application level entities in accordance with at least one embodiment of the present invention.

FIG. 10 discloses an example of communication configuration formulation in accordance with at least one embodiment of the present invention.

FIG. 11 discloses an example of a inter-apparatus communication in accordance with at least one embodiment of the present invention.

FIG. 12A discloses a flowchart for an example resource access process from the perspective of a requestor in accordance with at least one embodiment of the present invention.

FIG. 12B discloses a flowchart for an example resource access process from the perspective of a provider in accordance with at least one embodiment of the present invention.

### DESCRIPTION OF EXAMPLE EMBODIMENTS

While the invention has been described below in terms of a multitude of example embodiments, various changes can be made therein without departing from the spirit and scope of the invention, as described in the appended claims.

### I. System Architecture

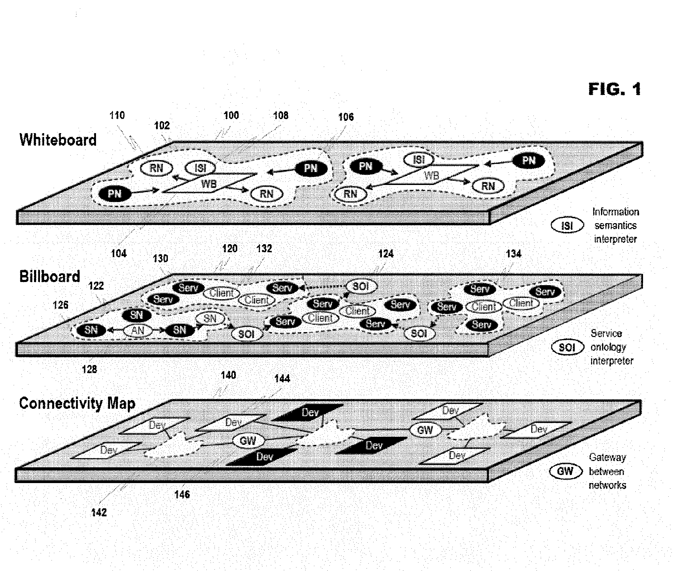

An example wireless communication architecture in accordance with at least one embodiment of the present invention is disclosed in FIG. 1. While the present invention focuses mainly on Billboard 120 and Connectivity Map 140, Whiteboard 100 is also disclosed for contextual purposes. Whiteboard 100 may comprise the highest level of operation in this architecture. At this level, operational groups 102 may be formed including whiteboards 104 and various application nodes. Application nodes may correspond to application existing on a plurality of wireless communication devices, and may be utilized to exchange information between these applications, for example, by placing data into, and removing data from, whiteboard 104. For example, the various nodes may consist of proactive nodes (PN) 106 that may be utilized to place information into whiteboard 104, reactive nodes (RN) 110 may be utilized to take information from whiteboard 104. Information semantics interpreter (ISI) 108 may be utilized to link different whiteboards together. Utilizing these constructs, Whiteboard 104 may provide a standardized means for application interaction that overcomes many incompatibilities.

Billboard level 120 may facilitate interaction between services available on the one or more devices. For instance, Billboard level 120 may enable the sharing of service-related information (e.g., service identification information, functionality, etc.), as well as any information that may be necessary in order to access and/or utilize each service. Services 130 and clients 120 that may utilize these services may be organized in service domains 122. In at least one scenario, service domains 122 may correspond to a particular protocol, such as Universal Plug and Play (UPnP), Bluetooth^{™} Service Discovery Protocol (BT SDP), Bonjour, etc. In each service domain 122, services 130 may be represented by service nodes (SN) 126, and likewise, application nodes (AN) 128 may be established to correspond to applications. Further, service domains 122 may interact utilizing service ontology interpreters (SOI) 124. SOI 124 may allow service domains 122 to interact with other service domains 122 in the service level, even if the service domains 122 reside on different wirelessly-linked devices (e.g., to provide access information to other service domains 122).

Connectivity map 140 may define available connectivity methods/possibilities and topology for different devices participating in sharing resources in order to support whiteboard 100 and billboard 120. In at least one embodiment of the present invention, devices 144 may be linked in directly connected groups 142. Examples of directly connected groups of devices (Dev) 142 may include devices connected via Bluetooth^{™} piconet, a WLAN network, a wUSB link, etc. Each directly connected group of devices 142 may further be linked by gateways (GW).

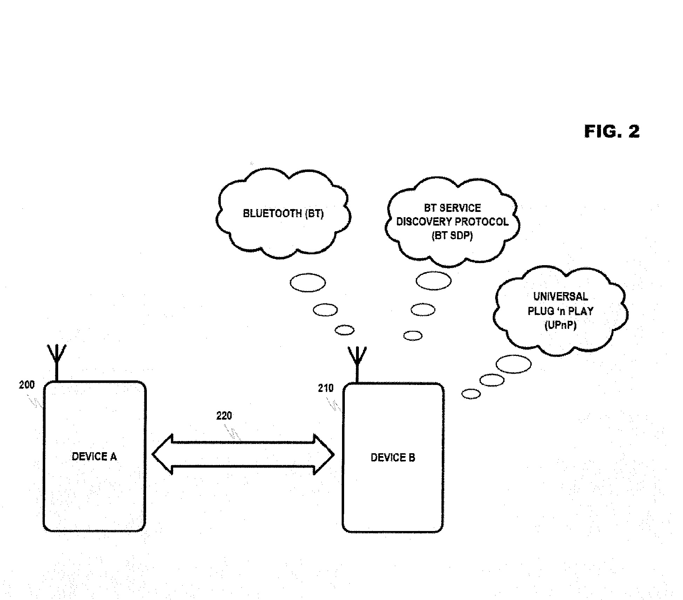

While FIG. 1 discloses an overall communication architecture usable with various example embodiments of the present invention, for the sake of explanation in the present disclosure, a much more rudimentary scenario will be utilized to illustrate service node related functionality. FIG. 2 discloses device A 200 and device B 210. Examples of devices usable in instance may include various wireless communication devices ranging from very basic wireless devices like wirelessly-enabled sensors or cellular handsets to more complex wirelessly-enabled computing devices like laptop or palmtop computers, wireless communicators, personal digital assistants, or any similar devices with wired connectivity interfaces. The devices disclosed in FIG. 2 may be linked via wireless communication 220 (e.g., WLAN), for example, in order to form an ad-hoc network between the devices. Device B 210 may further include a variety of services and service search mechanism such as Bluetooth^{™}-related BT SDP and UPnP. Under existing architecture schemes, device A 200 would not be aware of these services over wireless link 220, and further, even if device A 200 was aware, most or all of these services would probably be inaccessible due to various incompatibility issues existing between services. As a result, wireless coupling 220 between Device A 200 and Device B 210 may only be beneficial for conveying information, since no access to remote services is available.

### II. Service node implementation

A service may be defined as the functionality offered or derived from a particular software program. Services may pertain to all aspects of device functionality. Services may be provided, for example, by an operating system loaded on a wireless communication device, or may be added to the device by accessory applications related to communication, security, productivity, device resource management, entertainment, etc.
In accordance with at least one embodiment of the present invention, one or more service nodes may be established to correspond to services available on the one or more devices.

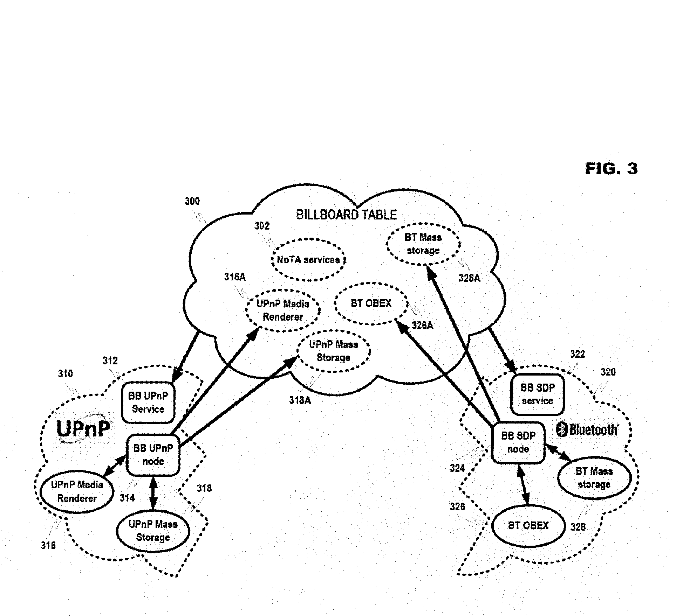

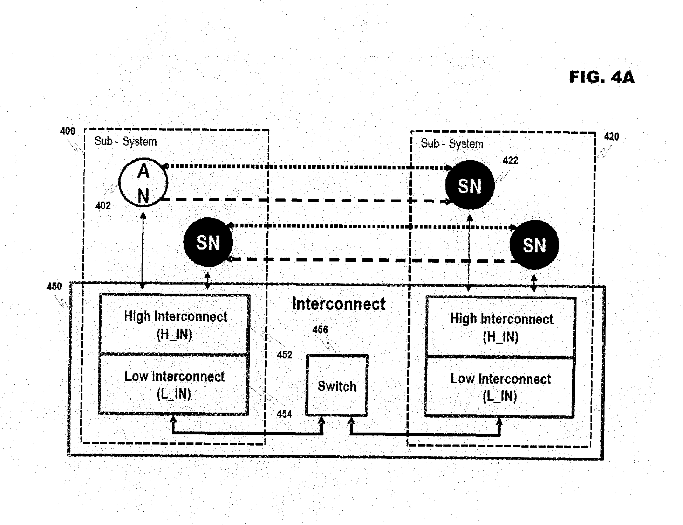

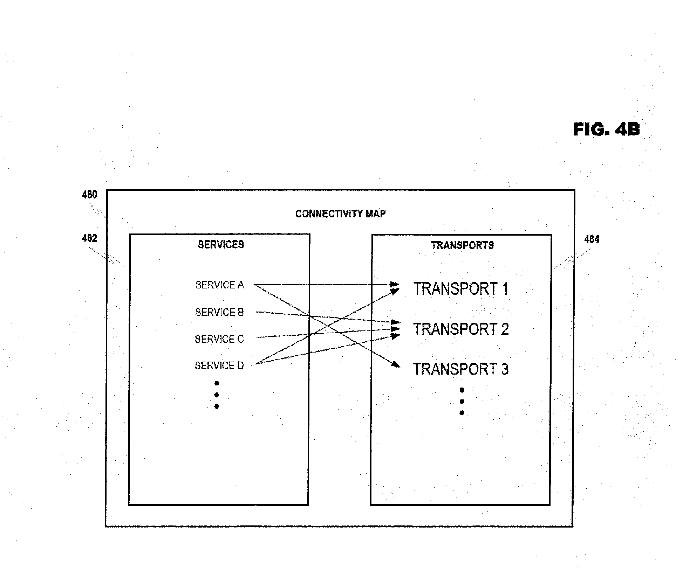

FIG. 3 discloses an example of billboard functionality in accordance with at least one embodiment of the present invention. Billboard 300 may comprise a shared memory space established amongst one or more wired or wireless devices. The scenario disclosed in FIG. 3 may further include a protocol such as UPnP 310 installed on a device (e.g., device A 200), and Bluetooth^{™} SDP 320 installed, for example, on device B 210. Billboard 300 may interact with these protocols using one or more services installed on devices A 200 and B 210, such as example billboard services BB UPnP service 312 and BB SDP service 322. BB services 312 and 322 may typically be components of UPnP and BT architecture but they may be components of a NoTA architecture, an example configuration of which is described in detail below with respect to FIG. 4.

UPnP 310 may offer various services locally on device A 200. These services may include UPnP media renderer service 316 and UPnP mass storage service 318. Similarly, Bluetooth^{™} SDP 320 may provide BT OBEX service 316 and BT mass storage service 328 on device B 210. It is important to note that these specific services have been used only for the sake of example in the present disclosure, and are not intended to limit the scope of services usable with various embodiments of the present invention. While these example services would normally only be accessible to applications residing on the same service domain, the present invention, in accordance with at least one embodiment, may provide for the interaction of various services and/or applications, regardless of the domain on which a service resides.

At least one embodiment of the present invention may operate by creating service information entries corresponding to services offered on each device in billboard table 300. In the scenario disclosed in FIG. 3, BB UPnP node 314 and BB SDP node 324 may create service information entries UPnP media renderer service 316A and UPnP mass storage service 318A, as well as BT OBEX service 316A and BT mass storage service 328A, respectively. These service information entries exist in a common billboard table 300, despite the protocols and services actually residing on separate devices. Further, the service information entries may provide information about services to other services and/or applications, such as the name of the service, service properties, pairing & authentication information utilized in accessing a particular service and/or transport mediums usable with each service. This service information may be obtained, for example by utilizing BB SDP service 324 if billboard table 300 wants to be used from the BT domain, or BB UPnP 314 service if billboard table 300 is wants to be utilized from the UPnP domain. It may also be possible that some architectures, such as NoTA, support billboard service directly. NoTA services 302 may be utilized, in accordance with at least one embodiment of the present invention, to establish the initial communication between devices A 200 and B 210 via a wireless communication medium in order to establish a shared memory space that will be utilized as Billboard table 300.

### III. Underlying architecture

FIG. 4A discloses an example of an underlying logical architecture that may be utilized in implementing NoTA. NoTA may be configured as multiple subsystems (e.g., 400 and 420) coupled by interconnect 450. NoTA interconnect 450 may comprise two layers: High Interconnect (H_IN) layer 452 and Low Interconnect (L_IN) layer 454 coupled by switch 456. Low interconnect layer 454 may include ISO/OSI layers L1 - L4 and may provide transport socket type interface upwards. High Interconnect layer 452 may act as the middleware between L_IN 454 and the higher level Application nodes (AN) 402 and Service nodes (SN) 422 residing in subsystems like 400 and 420. Key H_IN 452 functionality is to provide client nodes (AN 402 or SN 422) on top a direct access to services (without having to disclose the location of the latter). Communication may be connection-oriented, meaning that before any service or data communication takes place, connection setup procedures need to be carried out. Security features have been added to countermeasure the identified threats. NoTA is an architecture that may be used to provide intra-device service access, making it possible to build independent subsystems providing both services and applications. In an example implementation there may be several individual NoTA devices involved in direct inter sub-system communication.

FIG. 4B discloses another underlying construct that may be implemented in various embodiments of the present invention. Connectivity map 480 may be utilized to map the various services offered on the one or more devices participating in billboard table 300 to various transport mediums that may be utilized with each service. In the present example, transport mediums may comprise wireless communication mediums such as Bluetooth^{™}, WLAN, Wibree^{™}, wUSB, etc. In addition, the present invention, in accordance with at least one embodiment, may also be that radio technologies can be used with several protocols (e.g., Bluetooth protocols may be implemented over WLAN). However, the present invention is not specifically limited to using these particular wireless communication mediums, and may be implemented with other wireless communication mediums that are usable by services offered by various devices. In this example, Services offered by the devices may be listed under services 482, and the corresponding available transport mediums are listed under transports 484. Arrows between services 482 and transport mediums 484 indicate the one or more transport mediums usable by each service. The information in connectivity map 480 may, in accordance with various embodiments of the present invention, create a binding between billboard table content (e.g., service offerings) and connectivity map table content (e.g., available device connectivity configurations) so that this information may be utilized, for example, by applications in determining an appropriate transport medium to utilize with a particular service. Where two or more transport mediums are available, a particular transport medium may be selected based on various characteristics such as speed, traffic, priority of executing the service, other active wireless communication mediums, etc.

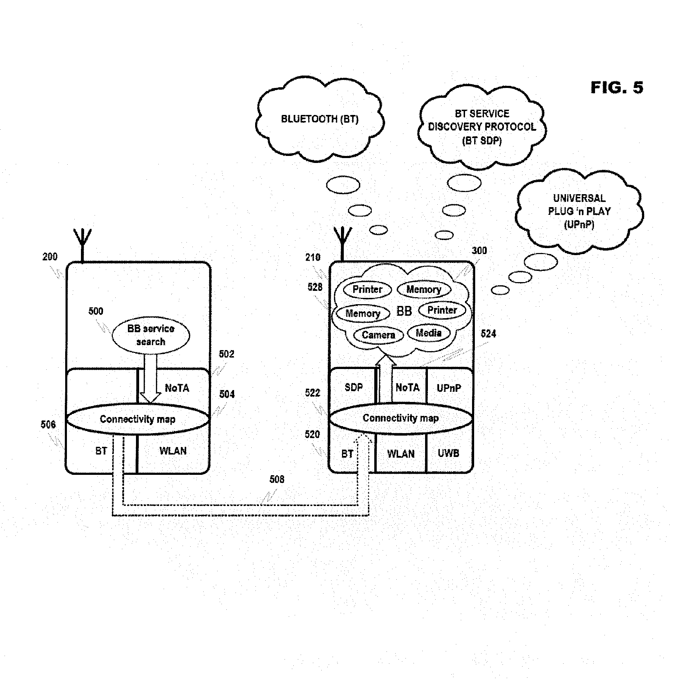

Now referring to FIG. 5, an example depicting a wireless transaction between device A 200 and device B 210 is disclosed in accordance with at least one embodiment of the present invention. In this instance, BB service search 500 on device A 200 may require the use of a particular service. Further, billboard table 300 may reside on device B 210. Regardless of the actual location of the service required by BB service search 500, a query may be made of billboard table 300 to gain access to a corresponding service node. This is because all available service information on the one or more devices participating in billboard table 300 is centrally located, reducing the steps required to access each service, and therefore, increasing the speed of access for available services. In addition, various embodiments of the present invention may include more than one billboard table 300 established between the linked devices. These billboard tables 300 may interact with each other to create a shared information pool that services may access.

BB service search 500 may, for example, using NoTA service 502 residing on device A 200 in order to access billboard table 300. In this example, connectivity map 504 may map to at least Bluetooth^{™} 506 as a transport medium usable by NoTA service 502. Other wireless communication mediums may also be usable as transport mediums, however in this example Bluetooth^{™} 506 is selected (e.g., by a user, by BB service search 500, by an application calling BB service search 500, etc.) A Bluetooth^{™} wireless link 508 may then be utilized to communicate between device A 200 and device B 210.

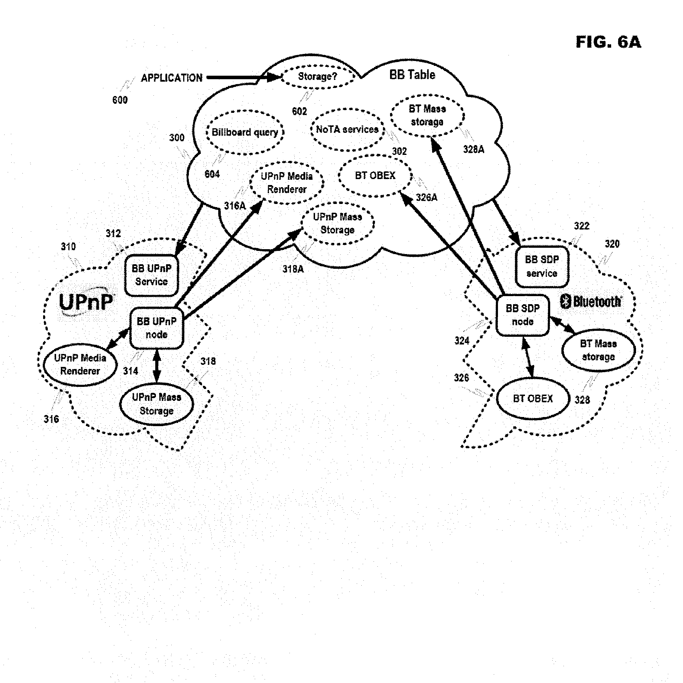

The wireless inquiry sent by device A 200 may then be received by device B 210. Bluetooth^{™} resources 520 in device B may correspond to (e.g., may be usable by) NoTA service 524 as determined by a mapping in connectivity map 522. NoTA service 524 may provide access to search billboard table 300, which may contain various service information entries 528 corresponding to various services available in the linked wireless communication devices. Again, while two devices are shown in the example of FIG. 5, more than two devices may participate in billboard table 300, including service nodes 528 corresponding to services that are offered by each device. BB service search 500 may then perform an inquiry of the service information entries 528 available in billboard table 300 in order to determine if any of the services corresponding to service information entries 528 will be suitable for the parameters specified in the search. An example inquiry of billboard table 300 is now described with respect to FIG. 6A-6E.

### IV. Example Application/Service Node Interaction

FIG. 6A-6E disclose an example usage scenario in accordance with at least one embodiment of the present invention. In FIG. 6A, an example situation is shown wherein application 600 running on one of the devices participating in billboard table 300 may have a requirement for storage as indicated at 602. As a result, access to a service providing storage activities may be desired in order to support application 600. This inquiry may be performed, at least in part, by a billboard query 604.

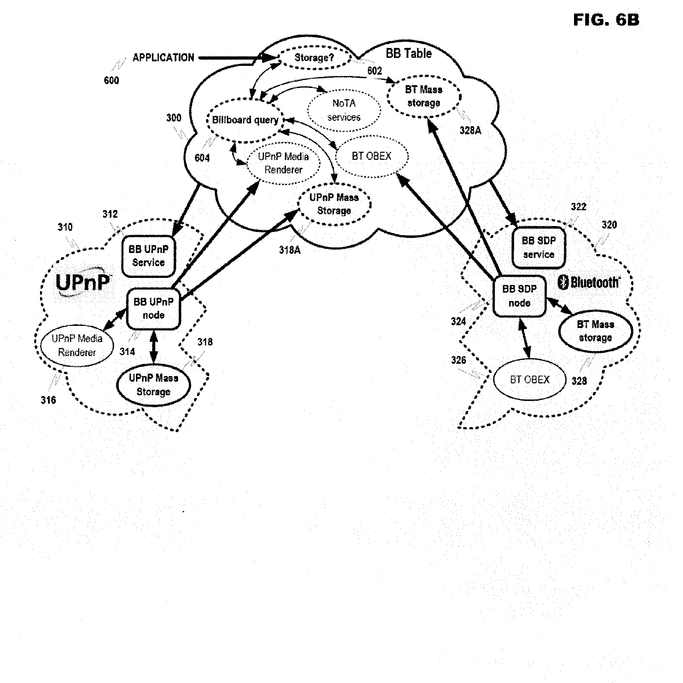

An inquiry process in accordance with at least one embodiment of the present invention is shown in FIG. 6B. Storage inquiry 602 may be referred billboard query 604, which queries all of the service nodes in billboard table 300 in order to determine the services that may potentially fulfill the needs of Application 600. In FIG. 6B two service nodes have been highlighted as potentially corresponding to services appropriate for storage requirement 602. The potentially applicable service information entries are UPnP mass storage 318A and BT mass storage 328A. Billboard query 604 may further obtain information related to the services from their respective nodes. For example, property information may be supplied by service information entries 318A and 328A to application 600 through billboard query 604. Information regarding transport mediums usable by each service may also be obtained through the use of connectivity map 480. All of the aforementioned information may be used in determining which service to select for supporting application 600. For example, the properties of a particular service may be more useful for, or accessible to, application 600. A particular service may also be selected because a usable transport medium is better able to support the activity to be performed because other transport mediums already have too much traffic, are experiencing interference, conflict with other transport mediums, etc.

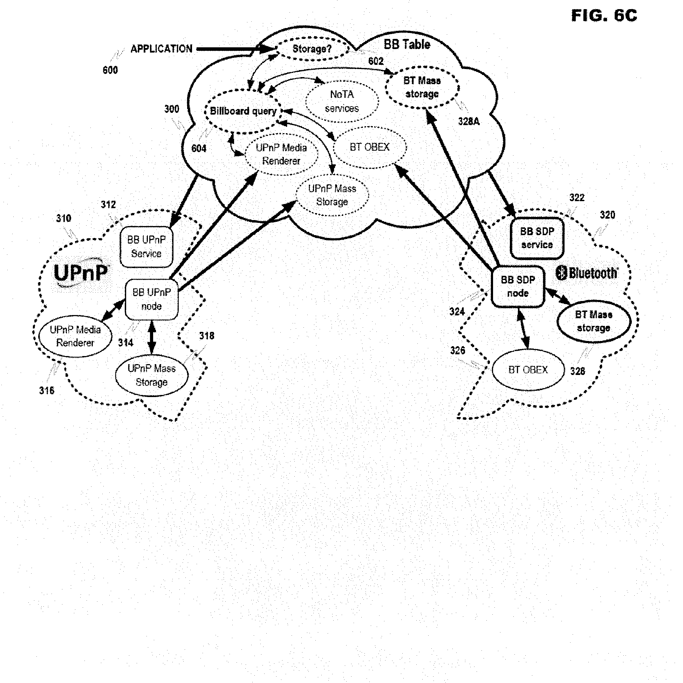

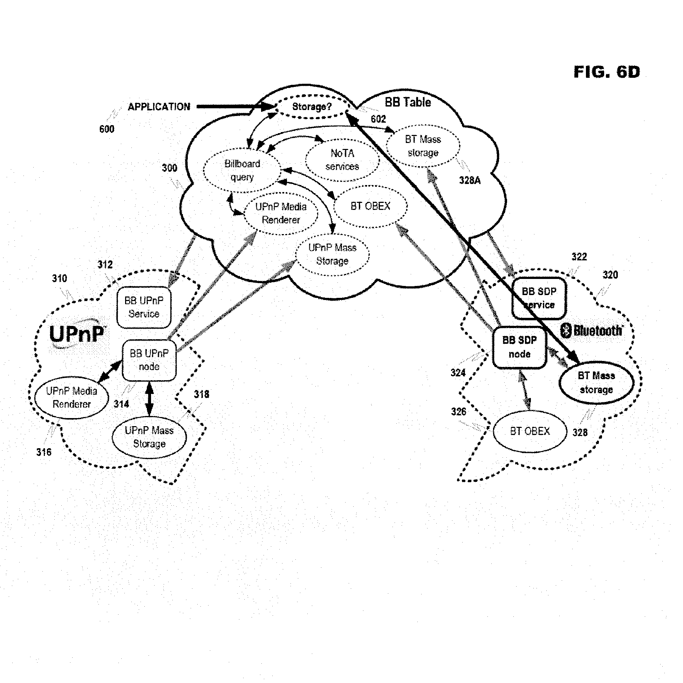

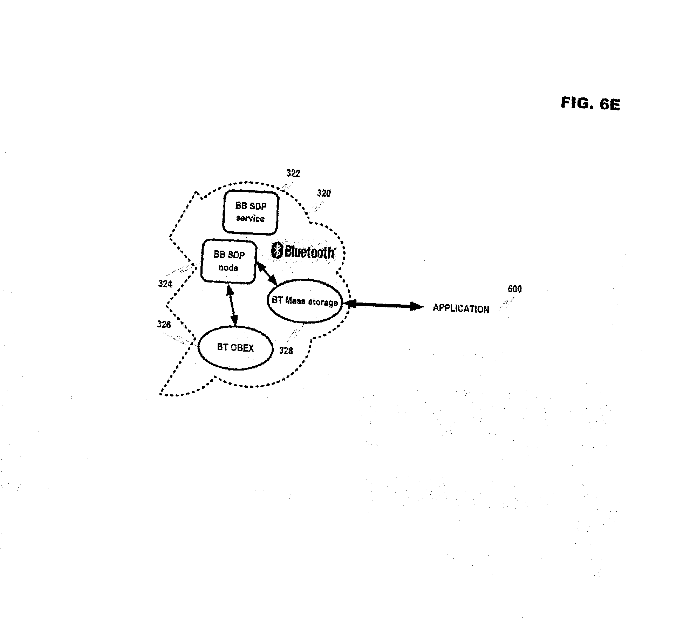

In FIG. 6C, BT mass storage service information entry 328A has been selected to support application 600. This selection may be made automatically by control elements in the one or more devices supporting billboard table 300, by application 600, by user selection of a preferred service and/or transport medium, etc. Billboard query 604 may then obtain all of the information necessary to access BT Mass storage service 328 from BT mass storage service information entry 328A. This information may include, for example, property information and transport medium information that may be further conveyed to application 600 in order to facilitate a direct link between application 600 with BT Mass storage service 328. An example direct linkage is shown in FIG. 6D, and a communication transaction resulting between application 600 and BT Mass storage service 328 is further shown in FIG. 6E.

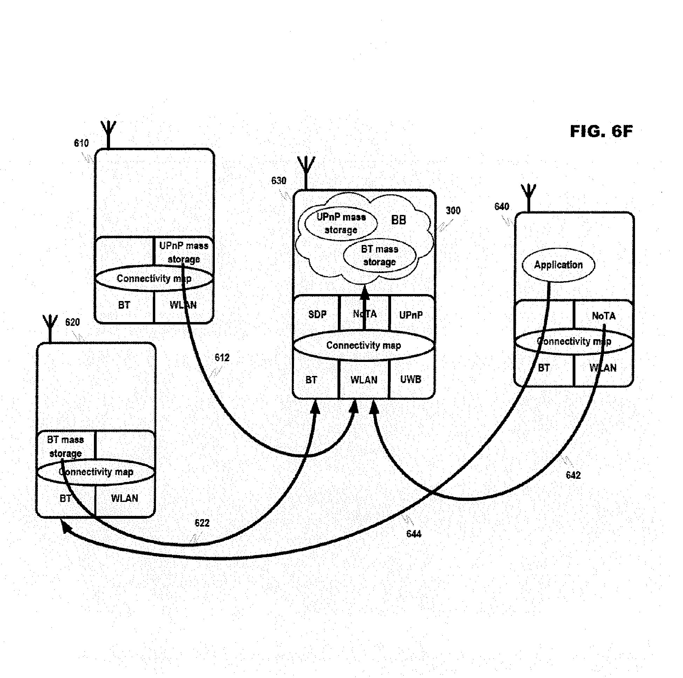

Now referring to FIG. 6F, an example of devices providing services to other devices via billboard table 300 in accordance with at least one embodiment of the present invention is disclosed. In this example, devices 610 and 620 may be wirelessly coupled to device 630. A UPnP protocol in device 610 may couple to device 630 via WLAN, as shown at 612, in order to create a UPnP mass storage service node in billboard table 300. Similarly, a BT mass storage service in device 620 may utilize the BT SDP protocol to create a service node in billboard table 300 via Bluetooth^{™} communication 622. After these devices have established billboard table 630, device 640 may enter.

Device 640 includes an application that requires a storage service. Device 640 may then access billboard table 300 on device 630 as shown at 642. This connection may be made, for example, utilizing a NoTA service communicating over WLAN. Device 640 may access billboard table 300 in order to query the available services. If more than one applicable service is located, a selection may be made as to the service most appropriate for the application. In this example it is determined that the BT mass storage service will be most appropriate to assist the application in device 640. Device 640 may then obtain information from the BT mass storage node, such as property and transport medium information, that will be needed in order to access the BT mass storage service. Device 640 may then access the BT mass storage service on device 620 in order to establish a direct connection between the application and the service a shown at 644.
V. Example source selection scenario when a plurality of sources are available.

In situations where two or more apparatuses are able to provide the same resources to an apparatus wishing to access said resources, a decision to utilize one apparatus over another apparatus may depend on various factors. An example indicator that may be used to determine a preferred source apparatus is energy. For instance, apparatuses that can provide required resources may currently be operating using a local power source (e.g., a battery) instead of external power (e.g., a wall outlet), may only operate with battery due to apparatus complexity, location, size, etc. limitations, may be operating utilizing a depleted energy source, may be quickly depleting stored energy due to substantial processing and/or communication tasks, etc. Indicators, such as those listed above, may be processed in order to determine apparatus condition, which may in turn be evaluated in view of device-level and/or system-level management objectives. In this way, sources for required resources may be selected based on the management objective.

However, even if users could identify apparatuses that are able to provide access to required resources and corresponding apparatus condition information, the level of skill required in order to make a determination as to which source to select would still be problematic for novice users, and possibly even for experienced users. In particular, it would require users to accumulate and comprehend condition information pertaining to at least the apparatuses that can provide the required resources, and then to determine which of these apparatuses to utilize based on some overall management goal (e.g., optimizing power in one or more apparatuses, system power optimization, etc.) Users would then be required to configure a connection to selected apparatuses/required resources, which would already have been burdensome in view of the potential pitfalls discussed above.

In addition, the above source apparatus selection process example does not take into account changes in the condition of source apparatuses as the desired resource is being accessed (e.g., energy depletion), or the source and consuming apparatuses losing their communication connection due to environmental interference, moving outside of communication range, one of the apparatuses crashing, etc. Such foreseeable conditions or events would unavoidably require repeating the entire process for each occurrence of a failure mode.

### VI. Example of resource provider selection.

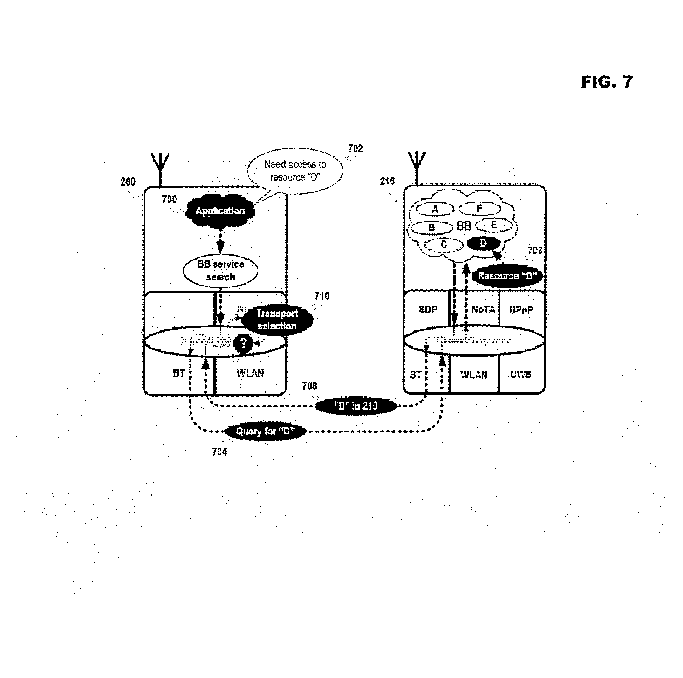

Now with respect to FIG. 7, drawing elements that were previously discussed in regard to other figures are not identified in FIG. 7 in order to reduce the complexity of the figure. In accordance with at least one example embodiment of the present invention, FIG. 7 discloses a possible interaction between apparatuses 200 and 210. Interaction between only two apparatuses has been disclosed in FIG. 7 for the sake of explanation herein, and thus, the present invention is not limited to use with only two apparatuses. Interaction in this scenario may be initiated by any participating apparatus, but in the disclosed example is triggered by application 700 in apparatus 200. Application 700 may be, for example, a software/ program module that upon activation, execution or user interaction creates requirements to access a resource (e.g., as shown at 702).

In accordance with the previously disclosed example embodiments of the present invention, BB search 500 may utilize a transport, such as Bluetooth^{™} (BT), to perform queries 704 of available resources in the NoTA environment. The same transport may further be used to exchange connectivity map information, which may eventually be utilized in transport selection 710 when appropriate transports are to be selected. The accumulation of this available resource information may help facilitate the identification of potential providers for requested resources, such as resource "D" requested by application 700. For example, information in BB 500 may disclose that resource "D" 706 actually resides on apparatus 210 in the NoTA environment, and therefore, apparatus 210 is able to act as a "provider" for resource "D" to apparatus 200.

A response 708 to inquiry 704 may be returned identifying one or more potential resources (e.g., services, databases, etc.) residing on at least one provider (in this case apparatus 210). However, subsequent transactions cannot be limited to utilizing the transport that was initially selected in order to perform the query. For example, high speed, low power, low throughput transports like Ultra Low Power Bluetooth^{™} may be adequate for performing initial queries, but would not be likewise appropriate for subsequent communication if large amounts of data are to be conveyed, a low amount of errors is required or other similar requirement exist.

### VII. Example of communication configuration process.

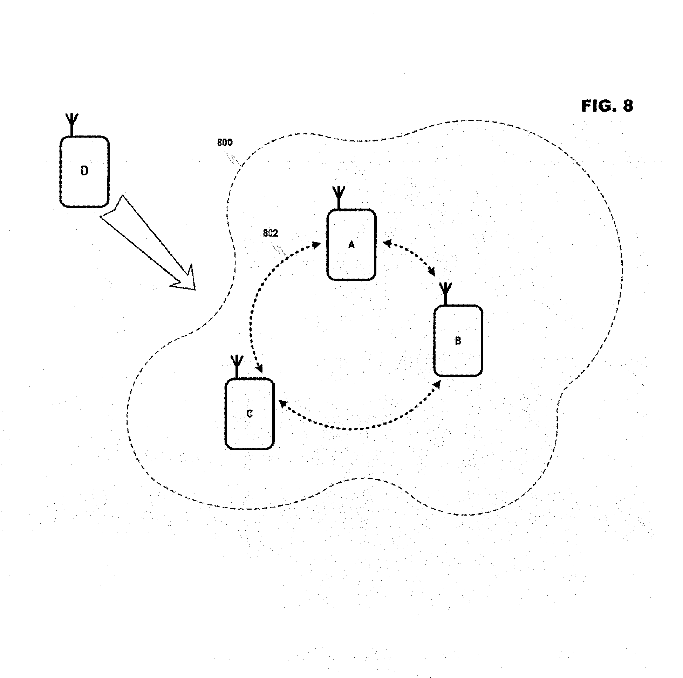

While the communication configuration (e.g., a wired/wireless transport operating in accordance with certain control parameters) used to access required resources may ultimately be selected by the apparatus that is seeking access, there are instances where this type of isolated operation can cause problems both to the apparatus and to other devices operating in the area. FIG. 8 discloses an example scenario wherein the independent configuration of communication configuration can be problematic. Example apparatuses "A" through "C" may interact utilizing wireless communication in FIG. 8. Interaction 802 may, in accordance with various embodiment of the present invention, utilize NoTA to couple the various devices. For example, a shared memory space established on one or more of the apparatuses may establish common operational environment 800. In addition, apparatuses such as apparatus "D" may enter into communication range of, and may subsequently seek to join, common operational environment 800.

Even though apparatuses "A" through "C" may interact in common operational environment 800, the manner by which each apparatus communicates is unregulated at the network level. For example, when operating independently any or all of the apparatuses may attempt to communicate with each other using the same wireless transport. Moreover, apparatus "D" may seek to enter operational environment 800 utilizing the same wireless transport as the existing apparatuses in common operational environment 800. It is evident that at least traffic concerns would exist with all apparatuses using the same wireless transport. Moreover, the concurrent operation of these apparatuses utilizing the same wireless transport may result in interference, which may negatively impact the Quality of Service (QoS) provided to users.

Potential traffic and interference utilizing the same wireless communication medium may not necessarily be remedied by one or more of the apparatuses utilizing another wireless transport. Initially, other wireless transports may operate in the same frequency band, which may trigger the same problematic situations seen with apparatuses operating using the same wireless transport. Moreover, environmental factors such as electromagnetic field interference (EMI), while emitted by apparatuses external to common operational environment 800, may still effect communication occurring on one or more wireless transports operating in the same frequency range. The impact of these problems may be exacerbated when many apparatuses are interacting via common operational space 800. For example, the operational situation of apparatuses located in one physical area may be totally different from apparatuses operating in other areas, and thus, the communication considerations for each may be different.

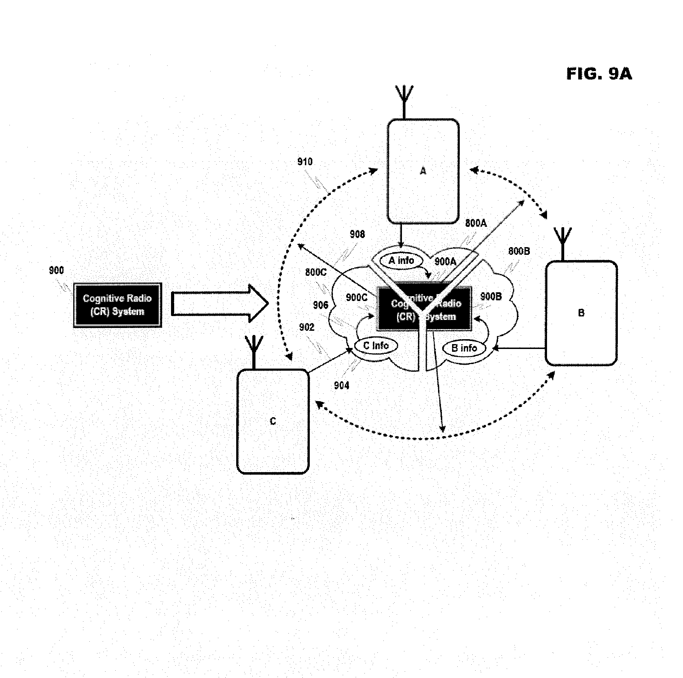

In accordance with at least one embodiment of the present invention, FIG. 9A discloses an example of system that may be utilized to coordinate communication configuration for some or all apparatuses (e.g., apparatuses A to C) interacting via a shared memory space (e.g., common operating environment 800). For example, a system may be implemented to help regulate inter-apparatus communication by making communication configuration information available to the apparatuses via entities (e.g., services) residing in the shared memory space.

Cognitive Radio (CR) system 900 is disclosed in an example distributed arrangement in FIG. 9A. More specifically, portions of CR 900 (e.g., 900A to C) may exist in shared memory space sections 800A to 800C residing on apparatuses A to C, respectively. However, the various example embodiments of the present invention are not specifically limited to the disclosed system, which has been provided for the sake of example herein. For example, CR system 900 may reside completely in the shared memory space section of a single apparatus. Some or all of the apparatuses may provide information 902 to their respective shared memory space sections 800A to 800C, an example of which is shown at 904. Information 904 provided by apparatuses A-C may be conveyed (as shown at 906) to CR system 900, which may utilize information 904 to formulate communication configuration information pertaining to some or all of apparatuses A-C. Communication configuration information may comprise, for example, one or more preferred configurations for each apparatus or information usable by apparatuses A-C in formulating their own configuration. Configuration information 908 may then be made available to apparatuses A-C to help facilitate the configuration of inter-apparatus communication 910.

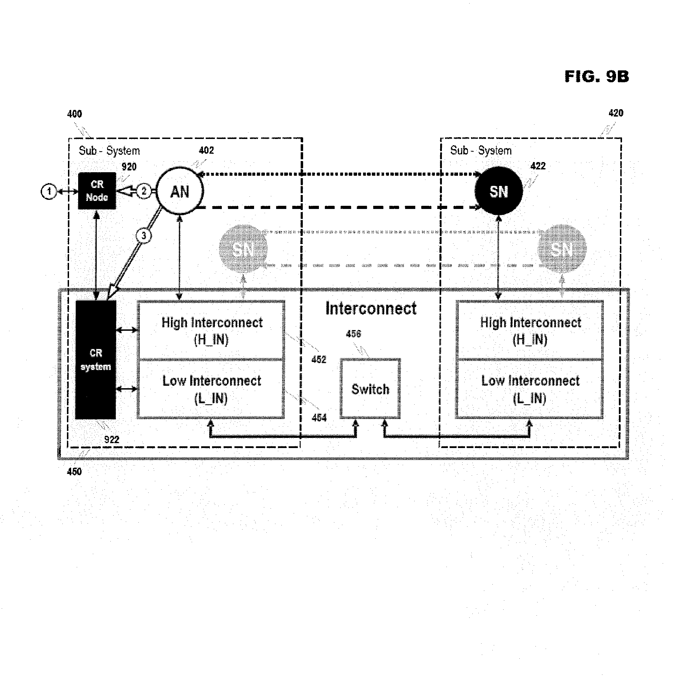

FIG. 9B discloses an example of the integration of CR system 900 into an NoTA in accordance with various example embodiments of the present invention. CR system 900 may comprise CR node/service element 920, which may correspond to services provided by system-level element 922. CR-node/service 920 may be utilized to provide configuration information between devices, such as between two CR nodes which is represented by ① in FIG. 9B. Generally CR-node/service may 920 exchange configuration information and CR system-level element 922 may provide access rules corresponding to certain transport techniques. Application level entities may provide detailed requirements (e.g., minimum QoS) for certain connections directly to CR-node/service 920, which is represented by ② in FIG. 9B, or alternatively, through direct interaction with CR system-level element 922, which is represented by ③ in FIG. 9B.

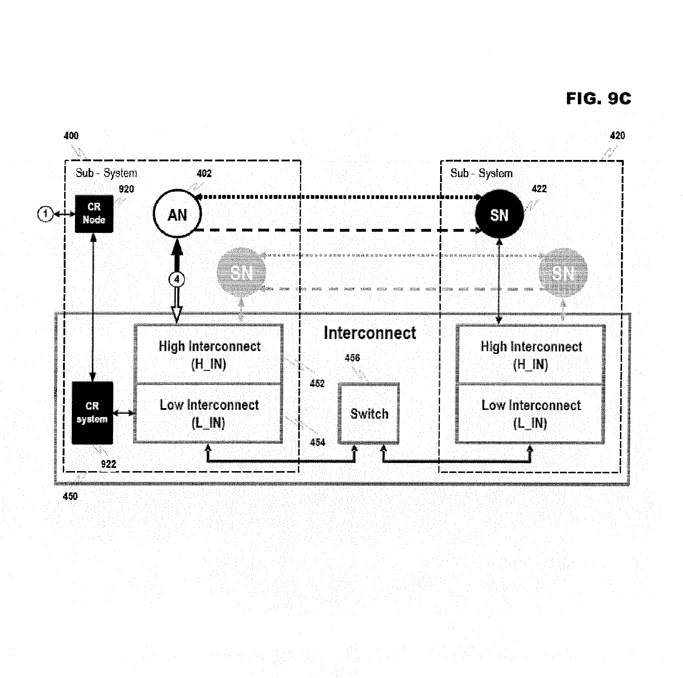

It is also possible for activities performed by CR system 900 to be transparent to upper-level entities. In this way, applications may simply specify the type of connection needed and may then rely on lower level control resources to establish a connection having the required characteristics. An example of this type of transparency is disclosed in FIG. 9C. AN 402 may interact with H_IN 452 similar to NoTA systems that do include CR functionality. Part of this interaction may include the specification of required operational parameters for the requested connection as shown at ④ in FIG. 9C. Upon receiving these requirements, L_IN 454 may provide the requirements to, and receive configuration information from, CR system-level element 922, which may be used to establish a connection. As further shown in FIG. 9C, CR node 920 may still exist in order to convey configuration information between devices.

In accordance with either of the example CR system implementations disclosed in FIG. 9B or 9C, CR system-level element 922 may provide access to various types of information such as one or more preferred communication configurations (e.g., particular transports, modes of operation, etc.) or other information that may be usable by apparatuses in formulating their own communication configuration. Alternatively CR system-level element 922 may represent that a desired interaction scenario is not currently possible/permitted based on the accumulated configuration information.

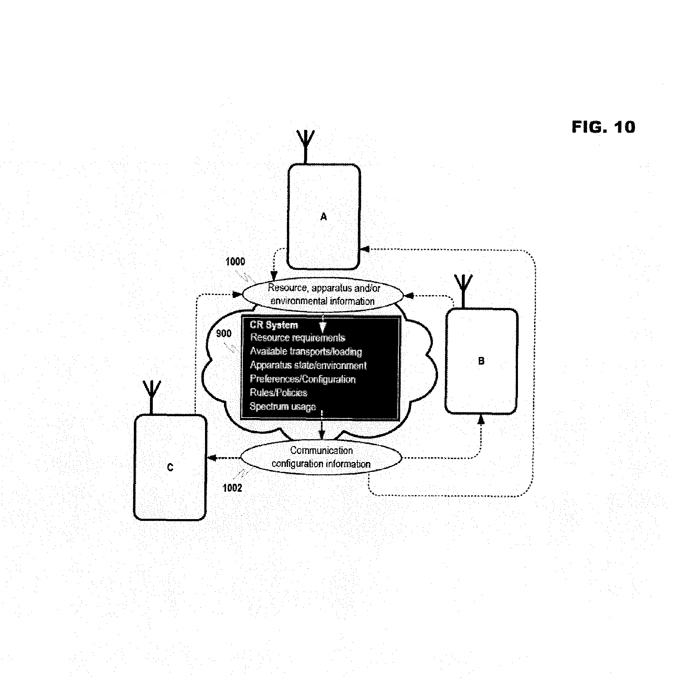

FIG. 10 discloses an example methodology by which CR system 900 may formulate communication configuration information. Initially decision criteria may be provided at 1000, the decision criteria comprising resource, apparatus and/or environmental information. Examples of resource information may include, but are not limited to, applications and/or services residing on an apparatus, hardware components that may be available in an apparatus (e.g., sensors, image capture devices like cameras, etc.), data stored on apparatuses, etc. Apparatus information may comprise, for example, communication transports supported by an apparatus, apparatus security requirements and information pertaining to the current operating condition of an apparatus (e.g., power level, active transports and corresponding traffic/pending messages for each, processor loading, etc.). Environmental information may encompass data obtained by an apparatus regarding the environment in which the apparatus is operating. For example, this type of information may include the current state of the transmission spectrum local to each apparatus or the indication of potential sources of interference in these areas. Potential sources of interference may be identified based on field sensors within the apparatus, packet loss experienced in communications over particular wireless transports, etc.

The decision criteria disclosed, for example, at 1000 may be supplied to CR system 900 in response to a request message, may be provided periodically based, for example, on a predetermined time period, in response to changes occurring in the apparatuses, etc. CR system may utilize the received decision criteria in one or more logical determination steps as shown in FIG. 10. For example, CR system 900 may consider the decision criteria in view of resource requirements such as communication link performance requirements (e.g., high speed and/or capacity for multimedia streaming), link security requirements for accessing private and/or sensitive information, etc. CR system 900 may further consider which communication transports are available and the loading of each of these transports system-wide and the current state and/or environmental conditions corresponding to each apparatus. Apparatuses that have limited power and/or processing resources may be slated for communication using transports that help to conserve these resources. Further, apparatuses experiencing interference based on locally active transports or proximately-located sources of interference may limited to using transports that are immune to these types of interference. Preferences/configuration may comprise non-condition or non-environmental provisions that control transport selection. For example, users may configure WLAN over high-speed cellular transports in order to save power, certain transports may be designated as always having priority (e.g., transport carrying voice data), etc. Rules/Policies may comprise, for example, regulatory rules that the nodes need to follow in their utilization of spectrum. Spectrum usage may further be utilized to determine the frequency spectrums that are preferred (or should be avoided) when establishing new communication links.

The culmination of the example logical decision steps shown in FIG. 10 may take the form of communication configuration information 1002. This information may be provided in various formats, such as possible communication configurations that may be adopted by an apparatus. For example, possible communication configurations may comprise assigning one or more communication transports (e.g., low power) for use in accessing a certain apparatus. Requesting applications and/or required resources may also dictate the selection of transports having specific speed, capacity, error-correction, security characteristics, etc. Further, transports may be excluded from configurations used to access certain apparatuses based on the potential negative impact of interference sources that are local or proximately-located to the apparatus.

In accordance with at least one example embodiment of the present invention, it is also possible for communication configuration information to consist of data that is usable when apparatuses are configuring their own communications. For example, communication transports supported by an apparatus, encryption or error-checking functionality available in an apparatus, local interference information and/or local spectrum utilization information, apparatus condition information, etc. may be made available to other apparatuses that desire to access resources on the apparatus. These other apparatuses may then formulate their own configuration in view of the abilities and/or limitations of the apparatus to which communication is desired. In either situation provided above (e.g., the provision of one or more possible configurations or information usable by apparatuses when configuring a link), the configuration information may be accessed directly by requesting apparatuses (e.g., such as by the apparatuses querying configuration data stored in a particular format), may be provided in one or more messages transmitted from CR system 900 in response to apparatus requests, etc.

### VIII. Implementation example.

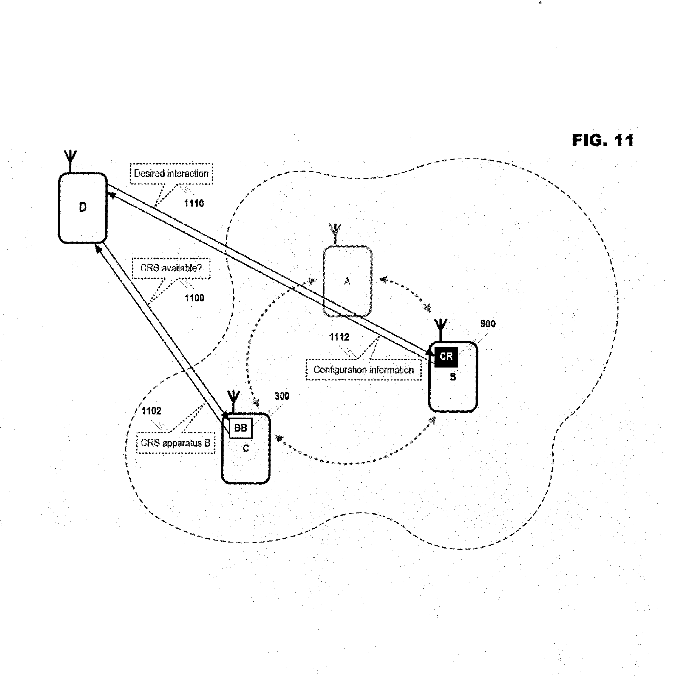

In accordance with various example embodiments of the present invention, an implementation scenario is disclosed in FIG. 11. As set forth in FIG. 8, apparatus D may desire to participated in the common operational environment currently comprising apparatuses A-C. Apparatus D may initially interact with billboard 300 (or a portion of billboard 300) residing on apparatus C. This communication may comprise two activities. For example, apparatus D may query billboard 300 (in accordance with the previously described example embodiments) in order to locate a required resource. Billboard 300 may accordingly provide potential resource providers and/or the apparatuses on which they reside. Further, as shown in FIG. 11 apparatus D may inquire as to whether a CR system is available at 1100. CR system 900 resides on apparatus 900 in the disclosed scenario, and so billboard 300 may inform apparatus D as such at 1102.

Apparatus D may then interact with CR system 900. In accordance with at least one example embodiment of the present invention, apparatus D may query CR system 900 in view of the desired interaction (e.g., accessing a resource provider on a certain apparatus) at 1110. This activity may be accomplished by querying configuration information stored by CR system 900, sending a request message from apparatus D to CR system 900, etc. Regardless of the manner by which access takes place, CR system 900 may provide configuration information (or alternatively may inform apparatus D that access to the resource/apparatus is currently not available). Apparatus D may utilize any communication configuration information provided to establish a link to an apparatus that is capable of providing access to the required resource.

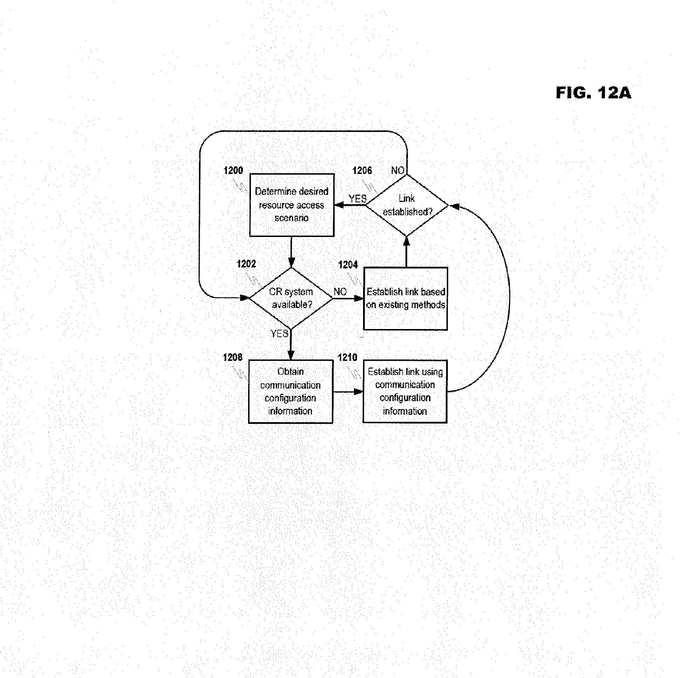

A flowchart of an example process that, in accordance with at least one example embodiment of the present invention, may be utilized to implement operational scenarios like that disclosed in FIG. 11 is now disclosed in FIG. 12A. In step 1200 a desired resource access scenario may be determined. A resource access scenario may be determined, for example, via a billboard query. In this case potential resource providers, along with the apparatuses on which they reside, may be reported to the requesting apparatus, and a access scenario may be devised based on this information. In step 1202 a determination may then be made as to whether a CR system is available in the common operational environment. A link may be established based on existing methods (e.g., based only on information available in the requesting apparatus) in step 1204 if no CR system is determined to be available. A communication link may then be attempted in step 1206. If the link is successfully established, then the process may return to step 1200 to await the next access requirement. Otherwise the process may return to step 1202 in order to request different communication configuration information (e.g., communication configuration information pertaining to a different resource access scenario or communication configuration information based on updated decision criteria) for accessing the required resource.

If a CR system is determined to be available in step 1202, a requesting apparatus may obtain communication configuration information based on the resource access scenario in step 1208. The requesting apparatus may then attempt to establish communications based on the provided communication configuration information. In scenarios where, for example, the information that is provided in step 1208 results in only one possible configuration, access may be attempted in step 1210. If this attempt fails (as determined in step 1206) the process may return to step 1202 for new/updated communication configuration information. If more than one communication configuration is possible in view of the information provided in step 1208, then the requesting apparatus may attempt to implement one or more possible communication configurations before determining whether additional configuration will be required in step 1206.

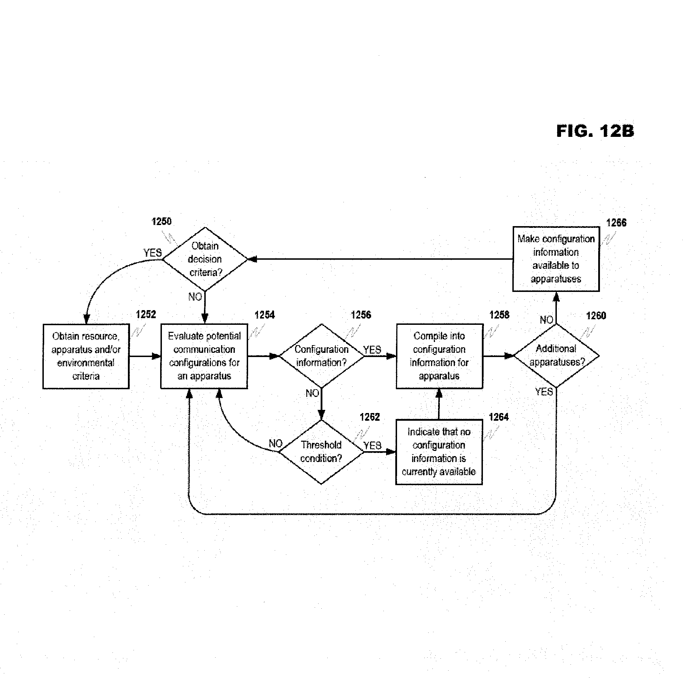

Now referring to FIG. 12B, a flowchart of another process in accordance with at least one example embodiment of the present invention is disclosed. A determination may be made in step 1250 as to whether to obtain decision criteria. This determination may be made, for example, in view of a lack of decision criteria for one or more apparatuses (e.g., due to new apparatuses participating in the shared memory space) or due to predetermined threshold criteria such as previously described. If it is determined that decision criteria should be obtained, then in step 1252 resource, apparatus and/or environmental criteria information may be obtained in step 1252. It is also possible that this information is obtained on an as-needed basis, for example, when the information is always available from the device on which the CR resides. Regardless of the determination in step 1250, the process may then proceed to step 1254 wherein communication configuration information may be accumulated on an apparatus-by-apparatus basis in view of the decision criteria taken alone or in combination with other information (e.g., such as the logical decision steps disclosed in FIG. 10). If information usable in configuring inter-apparatus communication is available in step 1256, then this communication configuration information may be compiled into the overall communication configuration information for the apparatus in step 1258. A determination may then be made in step 1260 as to communication configuration information is still needed from other apparatuses. If information is needed from apparatuses existing in the shared communication space, the process may return to step 1254.

If in step 1256 no usable communication configuration information is available for an apparatus, then in step 1262 the attempted accumulation of communication configuration information may continue in step 1254 until a threshold condition is reached. For example, a threshold condition may be a timeout, a limited number of attempts to obtain communication configuration information pertaining to an apparatus, etc. Once the threshold condition is realized in 1262 the process may move to step 1264 wherein an indication is made that no communication configuration information is currently available for the particular apparatus. This indication may be compiled into the communication configuration information in step 1258. The process may again loop in step 1260 while additional unevaluated apparatuses remain. If all apparatuses have been evaluated, then in step 1266 the communication configuration information may be made available to apparatuses (e.g., via services in the shared memory space). The process may then return to step 1250 for determining of whether to obtain new decision criteria.

While various exemplary configurations of the present invention have been disclosed above, the present invention is not strictly limited to the previous embodiments.

For example, the present invention may include, in accordance with at least one example embodiment, an apparatus comprising means, if determined to be required, obtaining decision criteria, means for determining communication configuration information pertaining to one or more apparatuses based on the decision criteria; and, and means for making the communication configuration information available to the apparatuses via a shared memory space.

Another configuration in accordance with an example embodiment of the present invention may include an apparatus comprising means for identifying a resource to which access is required, means for determining at least one apparatus that can provide access to the resource from amongst a plurality of apparatuses, means for, if a communication configuration service is determined to be available, accessing communication configuration information in the communication configuration service via a shared memory space, and means for utilizing the communication configuration information to establish access to the resource.

Accordingly, it will be apparent to persons skilled in the relevant art that various changes in forma and detail can be made therein without departing from the spirit and scope of the invention. The breadth and scope of the present invention should not be limited by any of the above-described example embodiments, but should be defined only in accordance with the following claims and their equivalents.

## Claims

1. A method, comprising:
obtaining decision criteria;
determining communication configuration information pertaining to one or more apparatuses based on the decision criteria; and
making the communication configuration information available to the apparatuses via a shared memory space.

2. A method according to claim 1, wherein obtaining the decision criteria comprises collecting at least one of resource information, apparatus information or environmental information pertaining to some or all of the apparatuses interacting via the shared memory space.

3. A method according to claim 1 or claim 2, wherein determining communication configuration information comprises determining at least one preferred wireless transport for establishing a wireless communication link between the apparatuses interacting via the shared memory space.

4. A method according to any one of claims 1-3, wherein the communication configuration information is provided via a service offered in the shared memory space.

5. A method, comprising:
identifying a resource to which access is required;
if a communication configuration service is determined to be available, accessing communication configuration information in the communication configuration service via a shared memory space; and
utilizing the communication configuration information to establish access to the resource.

6. A method according to claim 6, wherein the communication configuration information comprises the identification of at least one preferred wireless transport for establishing a wireless communication link between the apparatuses interacting via the shared memory space

7. A computer program comprising computer readable program code configured to cause performation of a method according to any one of the preceding claims when said program is run on a computer..

8. A computer program product comprising a computer usable medium having computer readable program code embodied in said medium, comprising a computer-readable program code configured to operate according to the code of claim 7.

9. An apparatus, comprising:
a processor, the processor being configured to cause the apparatus to:
obtain decision criteria;
determine communication configuration information pertaining to one or more apparatuses based on the decision criteria; and
make the communication configuration information available to the apparatuses via a shared memory space.

10. An apparatus according to claim 9, wherein when being configured to obtain the decision criteria the processor is configured to cause the apparatus to collect at least one of resource information, apparatus information or environmental information pertaining to some or all of the apparatuses interacting via the shared memory space.

11. An apparatus according to claim 9 or 10, wherein when being configured to determine communication configuration information the processor is configured to cause the apparatus to determine at least one preferred wireless transport for establishing a wireless communication link between the apparatuses interacting via the shared memory space.

12. An apparatus according to any of claims 9-11, wherein the processor is configured to cause the apparatus to make the communication configuration information available via a service offered in the shared memory space.

13. An apparatus, comprising:
a processor, the processor being configured to cause the apparatus to:
identify a resource to which access is required;
if a communication configuration service is determined to be available, access communication configuration information in the communication configuration service via a shared memory space; and
utilize the communication configuration information to establish access to the resource.

14. An apparatus according to claim 13, wherein the communication configuration information comprises the identification of at least one preferred wireless transport for establishing a wireless communication link between the apparatuses interacting via the shared memory space.
